# FASCICULE DE BREVET EUROPEEN

(11) **EP 1 201 537 B1**
(45) Date de publication et mention de la délivrance du brevet: **13.08.2003**
(21) Numéro de dépôt: 01402771.8
(22) Date de dépôt: 25.10.2001
(51) Int. Cl.: B64C 13/24, F16C 11/02, F16C 11/04, B64C 9/02

(54) **Timonerie pour gouverne d'aéronef**
Gestängeanordnung für Steuerflächen eines Flugzeuges
Aircraft control surface actuating linkage

(30) Priorité: 26.10.2000 FR 0013736
(43) Date de publication de la demande: 02.05.2002
(73) Titulaire: AIRBUS FRANCE, 31060 Toulouse (FR)
(72) Inventeur: Milliere, Jérôme, 31500 Toulouse (FR)
(74) Mandataire: Poulin, Gérard

(56) Documents cités:
- WO-A-01/26965
- US-A- 3 756 089
- US-A- 3 844 663

## Description

### Domaine technique

L'invention concerne un organe centré sur un axe longitudinal prédéterminé et conçu pour transmettre des efforts entre une région centrale et des régions d'extrémité dudit organe.

L'invention concerne également un dispositif comprenant un tel organe, associé à une tige cylindrique formant tourillon, sur laquelle prennent appui deux pièces servant respectivement à appliquer et à recevoir les efforts.

L'invention concerne aussi l'application d'un dispositif de ce type à la transmission des efforts entre un actionneur linéaire monté sur une structure fixe d'aéronef et une gouverne apte à pivoter par rapport à la structure fixe, autour d'un axe de rotation parallèle à l'axe longitudinal de la pièce de transmission d'efforts et décalé par rapport à cet axe. La structure fixe peut notamment être un élément de voilure, de dérive, d'empennage ou de fuselage de l'aéronef.

### Etat de la technique

Une gouverne d'aéronef est habituellement articulée sur des éléments structuraux de l'aéronef, considérés comme la partie fixe pour la gouverne mobile, de façon à pouvoir pivoter autour d'un axe de rotation lié à cette partie fixe. Le mouvement de rotation de la gouverne est piloté par une servocommande, matérialisée par un actionneur linéaire porté par la partie fixe de l'aéronef. L'actionneur linéaire comprend un embout à rotule. Celui-ci agit sur la gouverne par l'intermédiaire de ferrures fixées sur la gouverne au moyen de vis, de rivets, etc.. Les ferrures assurent également la rotation de la gouverne par rapport à la partie fixe de l'aéronef.

Une ferrure est connue de US-A-3,756,089, qui montre toutes les caractéristiques du préambule de la revendication indépentante.

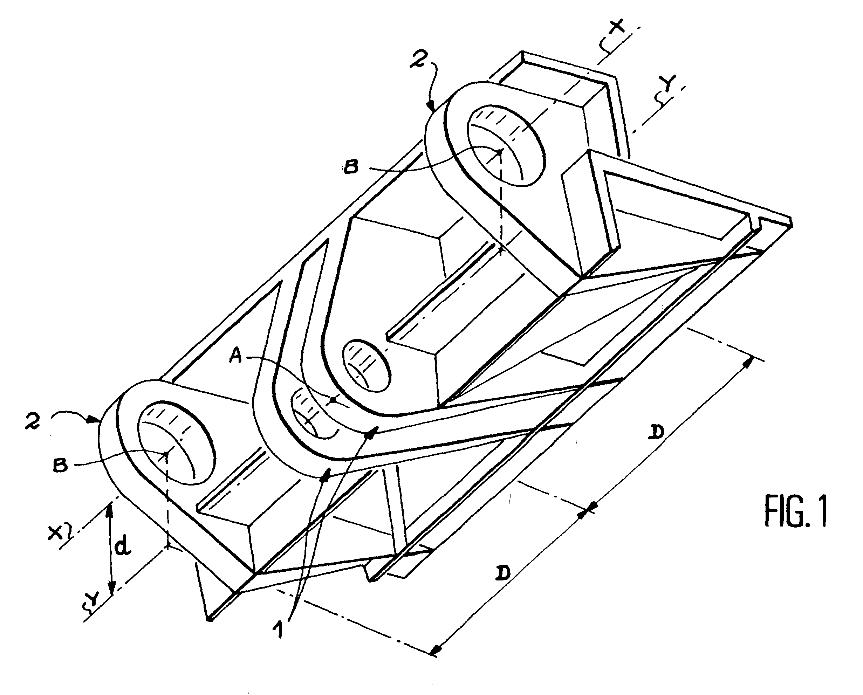

Une autre ferrure illustrant l'état de la technique est représentée schématiquement, en perspective, sur la figure 1 des dessins annexés.

Dans sa région centrale, la ferrure comprend généralement une chape femelle 1 supportant un premier tourillon (non représenté) sur lequel est monté l'embout à rotule de l'actionneur linéaire. Dans ses deux régions d'extrémité, la ferrure comprend également une chape mâle 2 traversée par un deuxième tourillon (non représenté) supporté par la partie fixe. Ce deuxième tourillon matérialise l'axe de rotation X-X de la gouverne. L'axe longitudinal Y-Y du premier tourillon et l'axe de rotation X-X de la gouverne sont parallèles et décalés d'une distance d l'un par rapport à l'autre. Des roulements ou des bagues (non représentés) sont interposés entre les chapes 1 et 2 de la ferrure et les tourillons.

Dans cet agencement connu, le point central A de la chape femelle 1 de la ferrure est distant du point central B de chacune des chapes mâles 2 de la ferrure d'une distance D, parallèlement aux axes X-X et Y-Y des tourillons. La distance d entre ces axes représente le bras de levier du dispositif de transmission d'efforts matérialisé par la ferrure. L'effort exercé par l'actionneur linéaire, associé au bras de levier, engendre un moment de rotation de la gouverne autour de son axe de rotation.X-X On commande ainsi une rotation de la gouverne autour de cet axe.

Lors de l'actionnement de la gouverne, une grosse partie des efforts exercés par l'actionneur linéaire transite de la chape femelle 1 placée dans la partie centrale de la ferrure jusqu'aux chapes mâles 2 placées dans les parties d'extrémité de la ferrure, par l'intermédiaire des structures de la ferrure et de la gouverne. Les contraintes et les déformées provoquées par l'application de ces efforts sur la structure de la ferrure sont proportionnelles à la distance D qui sépare la chape femelle 1 de chacune des chapes mâles 2 de la ferrure, parallèlement aux axes X-X et Y-Y des tourillons.

Dans la pratique, la distance entre les chapes mâles 2 placées aux extrémités de la ferrure et, par conséquent, la distance D, sont fonctions de l'encombrement de l'actionneur et des jeux nécessaires aux opérations de maintenance. Par ailleurs, l'encombrement de l'actionneur est fonction de son type (EHA-"Electro-Hydraulic Actuator"-, EBHA-"Electro-Backup Hydraulic Actuator", etc.), de ses caractéristiques (charge d'arrêt, course, etc.) et de la technologie retenue (bloc hydraulique en aluminium, en titane, etc.).

Lorsque l'encombrement de la servocommande augmente, il est donc nécessaire d'augmenter la distance D entre la chape femelle 1 liée à la partie centrale de la ferrure et les chapes mâles 2 placées aux extrémités de celle-ci. Cela impose une forte augmentation de la masse de la ferrure afin de limiter les contraintes et les déformations en son sein. Toutefois, une telle augmentation de masse est généralement incompatible avec les performances requises pour l'aéronef.

### Exposé de l'invention

L'invention a pour objet un organe conçu pour transmettre des efforts sensiblement radiaux entre une région centrale et des régions d'extrémité dudit organe, dont la conception originale lui permet de supporter des efforts de flexion très importants pour une masse sensiblement moindre qu'un tourillon cylindrique de conception classique.

Selon l'invention, ce résultat est obtenu en utilisant un organe de transmission d'efforts orientés sensiblement radialement par rapport à un axe longitudinal dudit organe, entre une région centrale et deux régions d'extrémité de celui-ci, ledit organe étant caractérisé en ce qu'il comprend au moins trois ailettes réparties autour dudit axe longitudinal et reliées entre elles dans lesdites régions d'extrémité, et au moins une paire d'éléments en forme d'étoile reliant entre elles les ailettes de part et d'autre de ladite région centrale.

La structure à ailettes de l'organe de transmission d'efforts permet d'absorber la majorité des efforts de flexion, grâce au fort moment d'inertie qu'elle engendre, pour une section donnée. Cette conception permet ainsi d'optimiser la masse de la structure

L'organe de transmission d'efforts selon l'invention est réalisé avantageusement en une seule pièce.

Dans un mode de réalisation préféré de l'invention, les ailettes sont régulièrement réparties autour de l'axe longitudinal dudit organe.

Dans ce même mode de réalisation, l'organe de transmission d'efforts est symétrique par rapport à un plan médian perpendiculaire à l'axe longitudinal dudit organe.

Pour simplifier la fabrication, toutes les ailettes peuvent être identiques.

Avantageusement, les ailettes sont reliées entre elles, dans lesdites régions d'extrémité, par deux premières bagues et chacun des éléments en forme d'étoile comporte en son centre une deuxième bague, les premières et deuxièmes bagues étant alignées selon ledit axe longitudinal.

L'invention a aussi pour objet un dispositif de transmission d'efforts comprenant un organe de transmission d'efforts tel que défini ci-dessus et une tige cylindrique formant tourillon traversant les premières et deuxièmes bagues, de façon à être liée en flexion à l'organe de transmission d'efforts, la tige cylindrique servant d'appui à une première pièce entre une paire d'éléments en forme d'étoile adjacente à la région centrale et à une deuxième pièce au-delà des premières bagues.

Avantageusement, des éléments formant paliers sont alors interposés entre la tige cylindrique et chacune des première et deuxièmes bagues.

Au-delà des premières bagues, la tige cylindrique traverse avantageusement deux voiles sensiblement plans, aptes à être fixés à la deuxième pièce. Les deux voiles forment ainsi une chape femelle articulée sur une chape mâle liée à la première pièce, par l'intermédiaire de la tige cylindrique, et deux chapes mâles articulées sur deux chapes femelles liées à une structure extérieure fixe, par l'intermédiaire d'une deuxième tige cylindrique formant tourillon, centrée sur un axe de rotation de la deuxième pièce par rapport à la structure fixe, cet axe de rotation étant parallèle à l'axe longitudinal de l'organe de transmission d'efforts.

Dans une application préférée de l'invention, la première pièce est une tige d'un actionneur à commande linéaire porté par la structure fixe et la deuxième pièce est une gouverne d'aéronef.

### Brève description des dessins

On décrira à présent, à titre d'exemple non limitatif, un mode de réalisation préféré de l'invention, en se référant aux dessins annexés, dans lesquels :
- la figure 1, déjà décrite, est une vue en perspective d'une ferrure de montage de gouverne d'aéronef conforme à l'art antérieur ;
- la figure 2 représente schématiquement, en vue de dessus, une voilure d'aéronef sur laquelle sont articulées des gouvernes susceptibles d'être actionnées par l'intermédiaire de dispositifs de transmission d'efforts conformes à l'invention ;
- la figure 3 est une vue en coupe, à plus grande échelle, selon la ligne III-III de la figure 2 ;
- la figure 4 est une vue en perspective d'un dispositif de transmission d'efforts conforme à l'invention ; et
- la figuré 5 est une vue en perspective d'un organe de transmission d'efforts formant une partie du dispositif de la figure 4.

### Description détaillée d'un mode de réalisation préféré

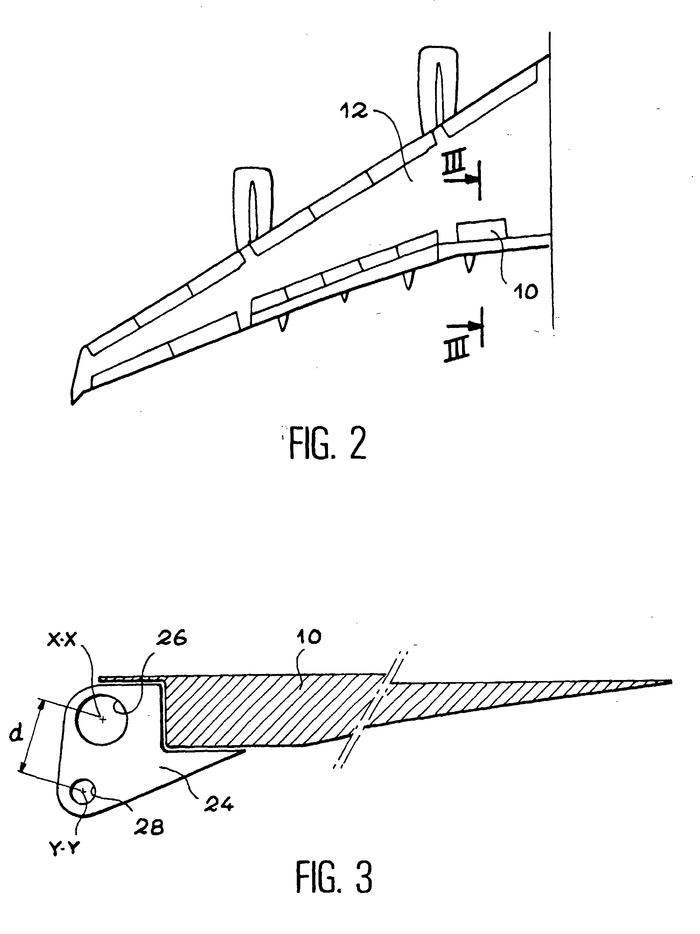

Comme l'illustre la figure 2 dans le cas particulier d'une aile d'avion, un aéronef comporte habituellement un grand nombre de gouvernes. Ce terme désigne ici, comme dans l'ensemble du texte, tous les éléments de type volets, ailerons, etc., qui sont articulés sur une partie fixe de l'aéronef telle que la voilure, la dérive, l'empennage ou le fuselage, pour permettre au pilote de modifier certaines caractéristiques de vol telles que le cap, la vitesse, la portance, etc..

Chacune des gouvernes, telles que celle qui est désignée par la référence 10 sur la figure 2, peut être articulée sur la partie fixe correspondante par l'intermédiaire d'un dispositif de transmission d'efforts conforme à l'invention. Dans le mode de réalisation représenté à titre d'exemple sur les figures 2 à 5, la partie fixe est constituée par l'aile 12 de l'avion et le dispositif de transmission d'efforts est désigné de façon générale par la référence 14.

Le dispositif de transmission d'efforts 14 est une structure assurant à la fois le montage pivotant de la gouverne 10 sur l'aile 12 et la transmission à la gouverne 10 des efforts susceptibles d'être appliqués par une servocommande (non représentée) de l'avion.

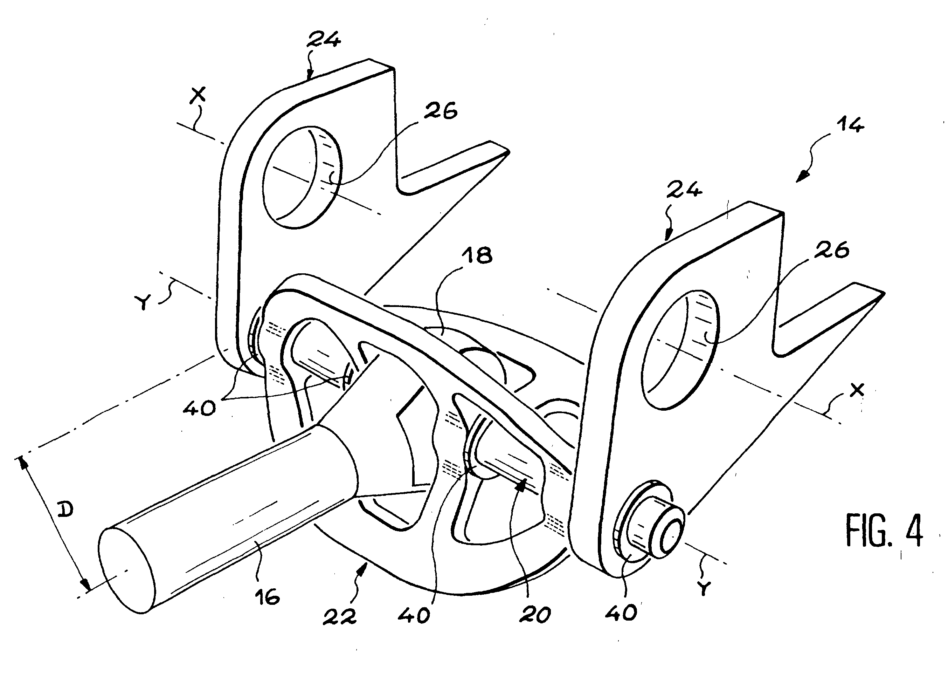

La servocommande comprend habituellement un actionneur linéaire individuel, affecté à la commande de chaque gouverne. Cet actionneur linéaire est logé dans la partie fixe supportant la gouverne, c'est-à-dire dans l'aile 12 dans le mode de réalisation représenté. Seule l'extrémité de la tige de commande de cet actionneur est illustrée en 16 sur la figure 4. Cette extrémité agit sur le dispositif 14 de transmission d'efforts par un embout à rotule 18.

De façon plus précise, si l'on désigne par X-X l'axe de rotation de la gouverne 10 par rapport à l'aile 12, la tige de commande 16 de l'actionneur linéaire agit sur le dispositif 14 de transmission d'efforts par un axe géométrique Y-Y parallèle à l'axe X-X, mais décalé d'une distance d par rapport à cet axe (figure 4).

Dans le mode de réalisation représenté sur les figures 2 à 5, le dispositif 14 de transmission d'efforts comprend principalement une tige cylindrique 20 formant tourillon, un organe 22 de transmission d'efforts et deux voiles ou plaques 24, sensiblement plans.

Les deux voiles 24 sont généralement identiques et orientés parallèlement l'un à l'autre, dans des plans sensiblement perpendiculaires aux axes X-X et Y-Y. Comme l'illustre très schématiquement la figure 3, ils sont prévus pour être fixés sur la gouverne 10, perpendiculairement à son plan. Cette fixation peut être assurée par tout moyen approprié, et notamment par vissage, rivetage, soudage, etc..

Chacun des voiles comporte un premier trou circulaire 26 centré sur l'axe X-X et un deuxième trou circulaire 28 centré sur l'axe Y-Y.

Les premiers trous 26 assurent le montage pivotant de la gouverne 10 sur l'aile 12, par l'intermédiaire d'une tige cylindrique (non représentée) formant tourillon. Plus précisément, chacun des voiles 24 forme une chape mâle, qui est articulée, par la tige cylindrique précitée, sur une chape femelle (non représentée) liée à l'aile.

Les deuxièmes trous 28 reçoivent de façon tournante des régions d'extrémité de la tige cylindrique 20 formant tourillon, comme l'illustre la figure 4. Les voiles 24 forment donc également une chape femelle, qui est articulée sur la chape mâle formée par l'embout à rotule 18, par l'intermédiaire de la tige cylindrique 20.

Il est à noter que l'écartement entre les voiles 24 augmente avec l'encombrement de l'actionneur. Toutefois, l'utilisation de l'organe 22 de transmission d'efforts conforme à l'invention permet de limiter considérablement l'augmentation de masse entraînée par un accroissement de l'écartement des voiles, comme on le comprendra mieux par la suite.

La tige cylindrique 20 est disposée coaxialement à l'intérieur de l'organe 22 de transmission d'efforts, de telle sorte que ces deux pièces soient liées l'une à l'autre, au moins en flexion. L'axe longitudinal commun à la - tige cylindrique 20 et à l'organe 22 est l'axe géométrique Y-Y au niveau duquel la tige de commande 16 de l'actionneur linéaire agit sur le dispositif 24 de transmission d'efforts.

Dans cet agencement propre à l'invention, l'ensemble constitué par la tige cylindrique 20 et l'organe 22 de transmission d'efforts forme un tourillon double, centré sur l'axe Y-Y. Ce tourillon double a pour fonction de transmettre aux voiles 24 les efforts appliqués sensiblement radialement par la tige de commande 16 de l'actionneur, dans la région centrale de la tige cylindrique 20 (figure 4). Plus précisément, le tourillon double formé par la tige cylindrique 20 associée à l'organe 22 de transmission d'efforts est conçu pour transmettre aux voiles 24 les efforts appliqués par la tige de commande 16 de l'actionneur avec une masse optimisée, c'est-à-dire minimale, quelle que soit la valeur de la distance D (figure 4) qui sépare l'axe de la tige de commande 16 du plan médian de chacun des voiles 24.

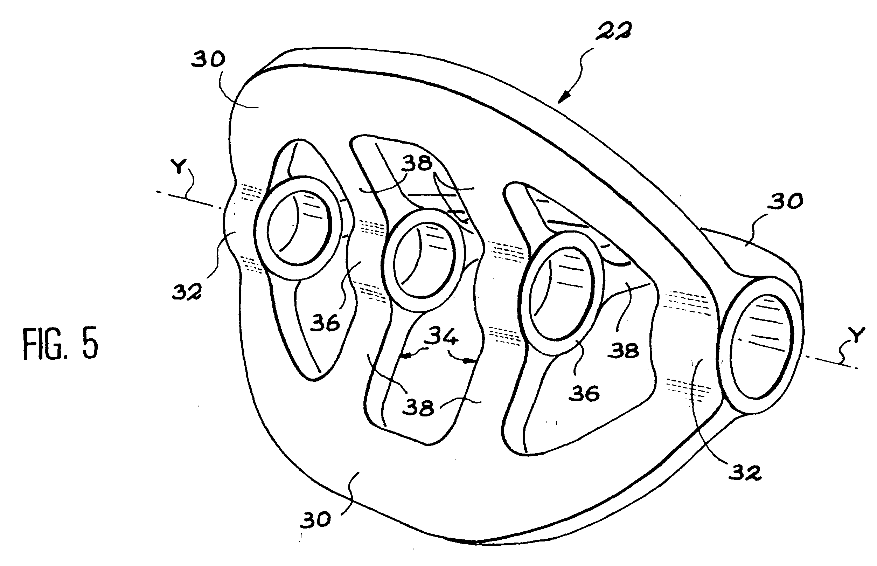

Pour parvenir à ce résultat, on utilise un organe 22 de transmission d'efforts dont la structure va à présent être décrite en détails en se référant à la figure 5.

Dans le mode de réalisation représenté sur la figure 5, l'organe 22 de transmission d'efforts est réalisé en une seule pièce. Il comprend trois ailettes 30, identiques les unes aux autres et régulièrement réparties autour de l'axe Y-Y. Chacune des ailettes 30 est sensiblement plane et son plan médian passe par l'axe Y-Y. De plus, les ailettes 30 présentent approximativement une forme en C et sont reliées les unes aux autres dans les régions d'extrémité de l'organe 22. Plus précisément, les extrémités des ailettes 30 sont reliées entre elles par deux premières bagues 32, centrées sur l'axe Y-Y.

L'organe 22 de transmission d'efforts illustré sur la figure 5 comprend également une paire d'éléments 34 en forme d'étoile. Ces éléments 34 relient entre elles les ailettes 30, de part et d'autre d'une région centrale de l'organe 22. Plus précisément, dans le mode de réalisation illustré à titre d'exemple sur la figure 5, chacun des éléments 34 en forme d'étoile comprend en son centre une deuxième bague 36, ainsi que trois branches 38 reliant la deuxième bague 36 à chacune des ailettes 30. Les deuxièmes bagues 36 sont généralement identiques aux premières bagues 32 et centrées sur le même axe Y-Y. Les branches 38 sont orientées radialement par rapport à l'axe Y-Y et présentent généralement des épaisseurs identiques à celles des ailettes 30. Toutefois, des branches 38 d'épaisseurs différentes de celles des ailettes 30 peuvent aussi être utilisées.

L'écartement entre les éléments 34 en forme d'étoile, parallèlement à l'axe Y-Y, est ajusté de façon que la distance entre les deuxièmes bagues 36 soit au moins égale à la largeur de l'embout à rotule 18 de la tige de commande 16 (figure 4), qui vient se loger entre ces éléments 34.

Dans des variantes de réalisation non représentées, les trois ailettes 30 réparties à 120 degrés les unes des autres peuvent être remplacées par un plus grand nombre d'ailettes, et notamment par quatre ailettes réparties à 90 degrés les unes des autres. Le nombre de branches 38 des éléments 34 en forme d'étoile est alors modifié de la même façon.

Dans d'autres variantes de réalisation non représentées, une ou plusieurs paires d'éléments en forme d'étoiles sont ajoutées entre les premières bagues 32 et la paire d'éléments 34 en forme d'étoile adjacente à la région centrale de l'organe 22 de transmission d'efforts. Cette modification peut notamment être justifiée par une augmentation de la longueur de l'organe 22. Quel que soit le nombre de paires d'éléments en forme d'étoile entrant dans la constitution de l'organe 22, celui-ci est symétrique par rapport à un plan médian perpendiculaire à l'axe Y-Y.

A titre d'exemple et de façon nullement limitative de la portée de l'invention, la hauteur des ailettes d'un organe 22 de transmission d'efforts à trois ailettes tel qu'illustré sur la figure 5, présentant une longueur de 360 mm, peut être de 130 mm.

Comme le montre la figure 4, l'organe 22 de transmission d'efforts est monté sur la tige cylindrique 20 par l'intermédiaire d'éléments 40 formant paliers, tels que des bagues de roulement ou autres. Ces éléments peuvent toutefois être supprimés, sans sortir du cadre de l'invention.

Dans l'assemblage illustré sur la figure 4, lorsque l'actionneur linéaire est mis en oeuvre, un effort est exercé sur la région centrale de la tige cylindrique 20, perpendiculairement à son axe longitudinal Y-Y, pour commander le pivotement de la gouverne 10 autour de son axe de rotation X-X, dans l'un ou l'autre sens.

Grâce à la présence de l'organe 22 de transmission d'efforts autour de la tige cylindrique 20, cet effort est transmis intégralement aux voiles 24 liés à la gouverne, au moyen d'un dispositif présentant une masse minimale, quelle que soit la distance D qui sépare les régions centrale et d'extrémité de la tige 20. En effet, la structure à ailettes de l'organe 22 de transmission d'efforts engendre un fort moment d'inertie, qui lui permet d'absorber la majorité des efforts de flexion. De plus, ce moment d'inertie est constant par rapport à son axe Y-Y, pour une section donnée, quelle que soit sa position angulaire.

La présence de l'organe 22 de transmission d'efforts, de conception optimisée, autour de la tige cylindrique 20, permet de conserver pour celle-ci un diamètre proche de celui qui serait utilisé avec une ferrure d'articulation classique comprenant une chape femelle encadrant directement l'embout à rotule 18. Par conséquent la masse globale du dispositif est optimisée, quelle que soit la taille de l'actionneur linéaire qui commande le volet.

Bien que l'ensemble de la description qui précède concerne la commande de gouvernes d'aéronefs, il est important de noter que l'invention n'est en aucun cas limitée à cette application. En effet, l'organe et le dispositif de transmission d'efforts qui ont été décrits, ainsi que les différentes variantes précédemment mentionnées, peuvent être utilisés à chaque fois qu'un effort sensiblement radial doit être transmis entre la région centrale et les régions d'extrémité du dispositif. Cette situation se retrouve dans de nombreux mécanismes et dans des domaines techniques très variés tels que les industries aéronautique et spatiale, l'industrie automobile, les machines-outils, les machines agricoles, etc..

Il est à noter, par ailleurs, que l'organe 22 et la tige 20 peuvent éventuellement être réalisés d'un seul tenant, sans sortir du cadre de l'invention.

## Revendications

1. Organe (22) de transmission d'efforts orientés sensiblement radialement par rapport à un axe longitudinal (Y-Y) dudit organe, entre une région centrale et deux régions d'extrémité de celui-ci, ledit organe (22) étant **caractérisé en ce qu'**il comprend au moins trois ailettes (30) réparties autour dudit axe longitudinal (Y-Y) et reliées entre elles dans lesdites régions d'extrémité, et au moins une paire d'éléments (34) en forme d'étoile reliant entre elles les ailettes (30) de part et d'autre dé ladite région centrale.

2. Organe de transmission d'efforts selon la revendication 1, dans lequel ledit organe (22) est réalisé en une seule pièce.

3. Organe de transmission d'efforts selon l'une quelconque des revendications 1 et 2, dans lequel les ailettes (30) sont régulièrement réparties autour dudit axe longitudinal (Y-Y).

4. Organe de transmission d'efforts selon l'une quelconque des revendications 1 à 3, dans lequel ledit organe (22) est symétrique par rapport à un plan médian perpendiculaire audit axe longitudinal (Y-Y).

5. Organe de transmission d'efforts selon l'une quelconque des revendications 1 à 4, dans lequel toutes les ailettes (30) sont identiques.

6. Organe de transmission d'efforts selon l'une quelconque des revendications 1 à 5, dans lequel les ailettes (30) sont reliées entre elles, dans lesdites régions d'extrémité, par deux premières bagues (32) et chacun des éléments (34) en forme d'étoile comporte en son centre une deuxième bague (36), les premières et deuxièmes bagues (32, 36)étant alignées selon ledit axe longitudinal (Y-Y).

7. Dispositif (14) de transmission d'efforts comprenant un organe (22) de transmission d'efforts selon la revendication 6 et une tige cylindrique (20) formant tourillon traversant les premières et deuxièmes bagues (32, 36), de façon à être liée en flexion à l'organe (22) de transmission d'efforts, la tige cylindrique (20) servant d'appui à une première pièce (16) entre une paire d'éléments (34) en forme d'étoile adjacente à la région centrale et à une deuxième pièce (10) au-delà des premières bagues.

8. Dispositif de transmission d'efforts selon la revendication 7, dans lequel des éléments (40) formant paliers sont interposés entre la tige cylindrique (20) et chacune des premières et deuxièmes bagues (32, 36).

9. Dispositif de transmission d'efforts selon l'une quelconque des revendications 7 et 8, dans lequel, au-delà des premières bagues (32), la tige cylindrique (20) traverse deux voiles (24) sensiblement plans, aptes à être fixés à la deuxième pièce (10), lesdits voiles formant une chape femelle articulée sur une chape mâle (18) liée à la première pièce (16), par l'intermédiaire de la tige cylindrique (20), et formant deux chapes mâles articulées sur deux chapes femelles liées à une structure extérieure fixe, par l'intermédiaire d'une deuxième tige cylindrique formant tourillon, centrée sur un axe de rotation (X-X) de la deuxième pièce (10) par rapport à la structure fixe, ledit axe de rotation (X-X) étant parallèle audit axe longitudinal (Y-Y).

10. Dispositif selon l'une quelconque des revendications 7 à 9, dans lequel la première pièce est une tige (16) d'un actionneur à commande linéaire porté par la structure fixe et la deuxième pièce est une gouverne (10) d'aéronef.

## Patentansprüche

1. Organ (22) zur Übertragung von im wesentlichen radial in bezug auf eine Längsachse (Y-Y) des Elements gerichteten Kräften zwischen einem Zentralbereich und zwei Endbereichen desselben, wobei das Organ (22) **dadurch gekennzeichnet ist, daß** es umfaßt: mindestens drei Flügel (30), die um die Längsachse (Y-Y) herum verteilt sind und untereinander in den Endbereichen verbunden sind, und mindestens ein Paar von Elementen (34) in Sternform, welche die Flügel (30) auf beiden Seiten des Zentralbereichs untereinander verbinden.

2. Organ zur Übertragung von Kräften nach Anspruch 1, wobei das Organ (22) aus einem einzigen Stück gefertigt ist.

3. Kraftübertragungsorgan nach einem der Ansprüche 1 oder 2, wobei die Flügel (30) regelmäßig um die Längsachse (Y-Y) herum verteilt sind.

4. Kraftübertragungsorgan nach einem der Ansprüche 1 bis 3, wobei das Organ (22) in bezug auf eine zur Längsachse (Y-Y) senkrechte Mittelebene symmetrisch ist.

5. Kraftübertragungsorgan nach einem der Ansprüche 1 bis 4, wobei die Flügel (30) identisch sind.

6. Kraftübertragungsorgan nach einem der Ansprüche 1 bis 5, wobei die Flügel (30) untereinander in den Endbereichen durch zwei erste Ringe (32) verbunden sind und jedes der Elemente (34) in Sternform in seinem Zentrum einen zweiten Ring (36) aufweist, wobei die ersten und zweiten Ringe (32, 36) längs der Längsachse (Y-Y) ausgerichtet sind.

7. Anordnung (14) zur Übertragung von Kräften mit einem Kraftübertragungsorgan (22) nach Anspruch 6, und einer zylindrischen Stange (20), die einen die ersten und zweiten Ringe (32,36) durchsetzenden Drehzapfen bilden, so daß diese biegsam mit dem Kraftübertraguhgsorgan (22) verbunden sind, wobei die zylindrische Stange (20) als Stütze für ein erstes Teil (16) zwischen einem an den Zentralbereich angrenzenden Elementepaar (34) in Sternform, und für ein zweites Teil (10) jenseits der ersten Ringe dient.

8. Kraftübertragungsanordnung nach Anspruch 7, wobei die Lager bildenden Elemente (40) zwischen die zylindrische Stange (20) und jeden der ersten und zweiten Ringe (32,36) eingefügt sind.

9. Kraftübertragungsanordnung nach einem der Ansprüche 7 oder 8, wobei jenseits der ersten Ringe (32) die zylindrische Stange (20) zwei im wesentlichen segelartige Bauteile (24) durchsetzt, die an dem zweiten Teil (10) befestigt werden können, wobei die segelartigen Bauteile ein weibliches Bauteil bilden, das mit einem mit dem ersten Teil (16) verbundenen männlichen Gelenkkopf (18) über die zylindrische Stange (20) gelenkig verbunden ist, und zwei männliche Bauteile bilden, welche mit zwei mit einer äußeren feststehenden Struktur verbundenen weiblichen Bauteilen über eine einen Drehzapfen bildende zweite zylindrische Stange, die an einer Drehachse (X-X) des zweiten Teils (10 in bezug auf die feststehende Struktur zentriert ist, gelenkig verbunden sind, wobei die Drehachse (X-X) parallel zu der Längsachse (Y-Y) ist.

10. Anordnung nach einem der Ansprüche 7 bis 9, wobei das erste Teil eine Stange (16) eines Betätigers mit linearer Steuerung ist, der von der feststehenden Struktur getragen wird, und das zweite Teil eineSteuerfläche bzw. eine Leitklappe eines Luftfahrzeugs ist.

## Claims

1. Device (22) for transmission of forces in approximately the radial direction from a longitudinal (Y-Y) axis of the said device, between a central region and two end regions of the device, the said device (22) being **characterized in that** it comprises at least three ribs (30) distributed around the said longitudinal axis (Y-Y) and connected to each other in the said end regions, and at least one pair of elements (34) in the shape of a star connecting the ribs (30) on each side of the said central region.

2. Force transmission device according to claim 1, in which the said device (22) is made in a single part.

3. Force transmission device according to either of claims 1 or 2, in which the ribs (30) are uniformly distributed around the said longitudinal (Y-Y) axis.

4. Force transmission device according to any one of claims 1 to 3, in which the said device (22) is symmetric about a median plane perpendicular to the said longitudinal (Y-Y) axis.

5. Force transmission device according to any one of claims 1 to 4, in which all ribs (30) are identical.

6. Force transmission device according to any one of claims 1 to 5, in which the ribs (30) are connected to each other in the said end regions by two first rings (32) and each of the star shaped elements (34) comprises a second ring (36) at its center, the first and second rings (32, 36) along the said longitudinal (Y-Y) axis.

7. Force transmission mechanism comprising a force transmission device (22) according to claim 6 and a cylindrical rod (20) acting as a pivot pin passing through the first and second rings (32, 36) so that it is fixed in bending to the force transmission device, the cylindrical rod (20) acting in bearing for a first part (16) between a pair of star shaped elements (34) adjacent to the central region and a second part (10) beyond the first rings.

8. Force transmission mechanism according to claim 7, in which the elements (40) forming bearings are inserted between the cylindrical rod (20) and each of the first and second rings (32, 36).

9. Force transmission mechanism according to either of claims 7 or 8, in which the cylindrical rod (20) passes through two approximately plane webs (24), that can be fixed to the second part, beyond the first rings (32), the two webs being designed to be fixed to the second part (10), the said webs forming a double eye plate articulated onto a single eye plate (18) connected to the first part (16) through the cylindrical rod (20), and forming two single eye plates articulated on two double eye plates linked to a fixed external structure through a second cylindrical rods acting as a pivot pin centered on an axis of rotation (X-X) of the second part (10) with respect to the fixed structure, this axis of rotation (X-X) being parallel to the said longitudinal (Y-Y) axis.

10. Force transmission mechanism according to any one of claims 7 to 9, in which the first part is a rod (16) of an actuator with linear control supported by the fixed structure and the second part is an aircraft control surface (10).
